# EUROPEAN PATENT APPLICATION

(11) **EP 4 252 523 A1**
(43) Date of publication of application: **04.10.2023**
(21) Application number: 23159985.3
(22) Date of filing: 03.03.2023
(51) Int. Cl.: A01G 3/037

(54) **ELECTRIC SHEARS AND METHOD OF USE OF SUCH SHEARS**

(30) Priority: 28.03.2022 IT 202200006011
(71) Applicant: Zanon S.R.L., 35011 Campodarsego PD (IT)
(72) Inventor: ZANON, Franco, 35011 CAMPODARSEGO PD (IT)
(74) Representative: Modiano, Micaela Nadia

(57) **Abstract**

Electric shears (10), comprising:

- a handle (11),

- an electrically actuated cutting portion (12), which extends from the handle (11) and comprises a first blade (13) and a second blade (14), at least the second blade (14) being operatable by a trigger (20) and being movable with respect to the handle (11) between:

- a position of maximum opening of the blades (13, 14), in which the tip (15) of the second blade (14) is at the maximum distance from the tip (16) of the first blade (13),

- a cutting position, in which the cutting edge (17) of the second blade (14) is in contact with said the blade (13).

The shears (10) comprise means (18) for the setting and actuation of an intermediate opening of the blades (13, 14) which can be set at will by means of a movement of the trigger (20).

## Description

The present invention relates to electric shears.

The invention can be used in the agricultural field in the farming and gardening sector to cut and/or prune branches, stems and plants.

Electric shears are currently known and widespread which are provided with a handle from which a cutting portion protrudes.

The cutting portion comprises two blades, of which:
- a first blade, which is fixed,
- a second blade, which is movable and can be operated by a trigger, by virtue of an electric motor from which motion is transmitted by means of a reduction unit kinematically connected to a rack which is integral with said second blade.

These known methods have some aspects that can be improved.

In the normal operation of electric shears of the known type, the position of the unpressed trigger corresponds to the maximum mechanical opening of the blades, while the fully pressed trigger position corresponds to the closing of the blades.

This operation is ideal for cutting stems with large diameters, but if, on the other hand, the user needs to cut stems of medium or small diameter this operation is not advantageous, since the opening and closing time of the blades is proportional to the path of the movable blade.

This entails, therefore, a waste of time and energy related to the need to fully open and close the blades even to cut stems of small or medium size.

The aim of the present invention is to provide shears capable of improving the background art in one or more of the aspects mentioned above.

Within this aim, an object of the present invention is to provide electric shears that allow at least two different blade opening widths.

Another object of the present invention is to provide electric shears that allow the user to set an intermediate opening width of the blades, according to the requirements.

Yet another object of the present invention is to provide electric shears that allow to save time and energy when cutting stems of small or medium size with respect to similar shears of the known type.

A further object of the present invention is to overcome the drawbacks of the background art in a manner that is alternative to any existing solutions.

Not least object of the present invention is to provide electric shears that are highly reliable, relatively easy to provide and at competitive costs.

This aim and these and other objects that will become better apparent hereinafter are achieved by electric shears, comprising:
- a handle,
- an electrically actuated cutting portion, which extends from said handle and comprises a first blade and a second blade, at least said second blade being operatable by a trigger and being movable with respect to said handle between:
- a position of maximum opening of the blades, in which the tip of said second blade is at the maximum distance from the tip of said first blade,
- a cutting position, in which the cutting edge of said second blade is in contact with said first blade,
said shears being characterized in that they comprise means for the setting and actuation of an intermediate opening of said blades which can be set at will by means of a movement of said trigger.

This aim and these and other objects which will become better apparent hereinafter are achieved by a method of use of such shears.

Further characteristics and advantages of the invention will become better apparent from the description of a preferred but not exclusive embodiment, of the electric shears according to the invention, illustrated by way of non-limiting example in the accompanying drawings, wherein:
Figure 1 is a perspective side view of electric shears according to the present invention;
Figure 2 is a different perspective view of the shears of Figure 1;
Figure 3 is an enlarged-scale view of a detail of the shears of Figure 1.

With reference to the figures, electric shears according to the invention are generally designated by the reference numeral 10.

The shears 10 comprise:
- a handle 11,
- an electrically actuated cutting portion 12, which extends from the handle and comprises a first blade 13 and a second blade 14, of which at least the second blade 14 is operatable by a trigger 20 and is movable with respect to the handle 11.

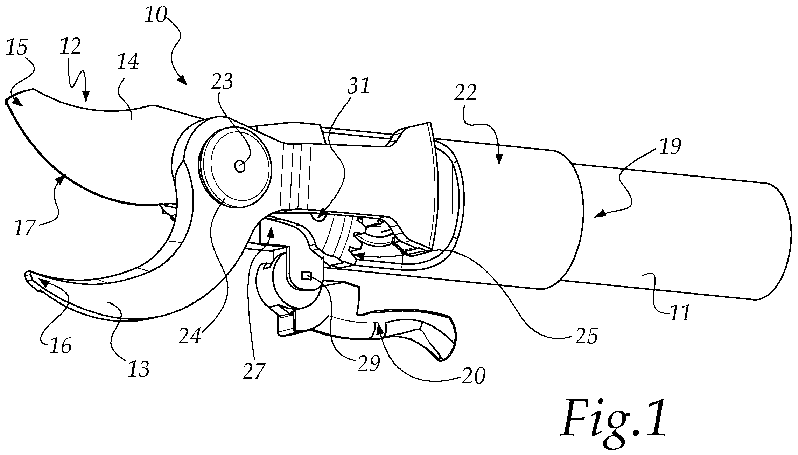

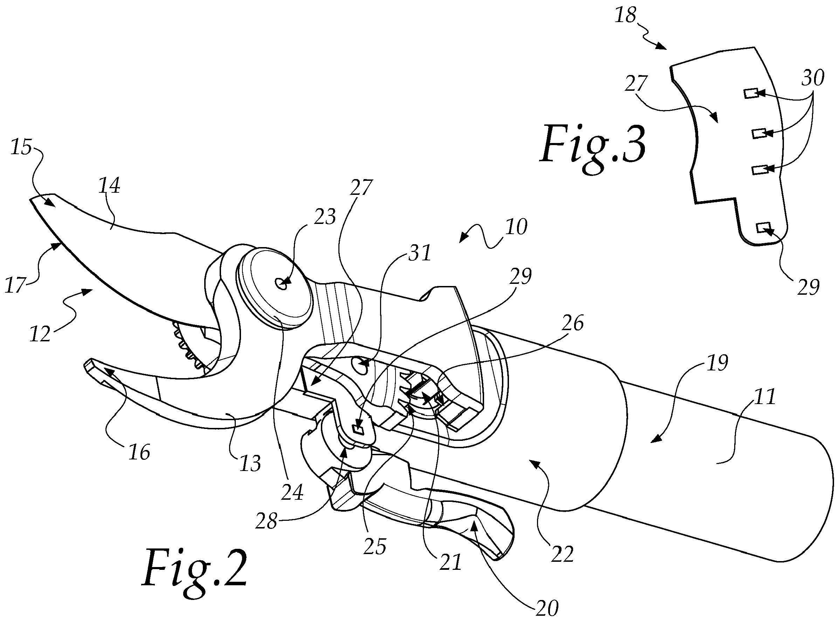

In particular, the second blade 14 is movable between:
- a maximum opening position of the blades, shown in Figures 1 and 2, in which the tip 15 of the second blade 14 is at the maximum distance from the tip 16 of the first blade 13,
- a cutting position, not shown in the figures, in which the cutting edge 17 of the second blade 14 is in contact with the first blade 13.

In the present description, the term "maximum opening" is understood to mean the maximum distance between the tips of the blades, allowed mechanically by the means for transmitting motion to the blades.

The first blade 13 is the contrast blade of the second blade 14.

The first blade 13 and the second blade 14 are metallic and of adequate strength.

One of the particularities of the invention resides in that the shears 10 comprise means 18 for the setting and actuation of an intermediate opening of the blades 13, 14, which can be set at will by means of a movement of the trigger 20, as will be explained better hereinafter.

In the example shown in the figures, the shears 10 also have the first blade 13 which is movable with respect to the handle 11.

In particular, the shears 10 comprise electric means for moving the two blades 13 and 14, which comprise:
- a gearmotor 19, which extends at least partially along the handle 11 and inside it and is powered by an electric battery not shown in the figures,
- the trigger 20 for the operation of the gearmotor 19, which is provided with a first magnet 28,
- a pinion 21, which is keyed on the output shaft of the gearmotor 19 and interacts with the first blade 13 and with the second blade 14.

The cutting portion 12 is associated with a support 22, at the distal end of the handle 11, which is at least partially tubular and inside which the gearmotor 19 extends at least partially.

Advantageously, but not exclusively, the support 22 is made of metallic material, preferably aluminum.

The first blade 13 and the second blade 14 are pivoted on a same pivot 23, which is provided with a widened head 24.

The pinion 21 is engaged, with its teeth:
- on one side, with a first rack 25 of the second blade 14,
- on the other side, with a second rack 26 of the first blade 13.

In this manner, by actuating the gearmotor 19, by means of the trigger 20, the pinion 21 rotates, moving simultaneously both the first rack 25, and therefore the second blade 14, and the second rack 26, and therefore the first blade 13.

The second blade 14 has a second magnet 31, which is arranged proximate to the first rack 25.

The shears 10 comprise:
- a first main electronic board, not shown in the figures, for the control and management of the shears 10,
- a second electronic board 27, for detecting the position of the trigger 20 and of the second blade 14, which is connected to the first electronic board, is associated with the support 22 and is arranged between it and the second blade 14.

Such second electronic board 27 has:
- a first sensor 29, for example a Hall-effect or angular sensor, adapted to interact with the first magnet 28 to detect the position of the trigger 20,
- a plurality of second Hall-effect sensors 30, which are arranged along a circular arc and are adapted to interact with the second magnet 31 to detect the position of the second blade 14.

The electric shears 10 allow to set up and actuate an intermediate opening of the blades 13, 14, i.e., an opening of the blades in which the second blade 14 is in a stable position comprised between the maximum opening position of the blades and the cutting position.

This is possible by virtue of the means 18 for the setting and actuation of an intermediate opening, which comprise:
- the trigger 20 and its first magnet 28,
- the second blade 14 and its second magnet 31,
- the second electronic board 27 and its sensors 29, 30,
- the first electronic board, which receives the position information of the second blade 14 and of the trigger 20 from the second electronic board 27 and actuates the gearmotor 19 so that the position of the second blade 14 follows the position of the trigger 20.

The operation of the shears 10 according to the invention is as follows.

Starting from the maximum opening position of the blades 13, 14, the user presses the trigger 20 until the second blade 14 is brought to the desired position in order to define a new (intermediate) opening, holding the trigger 20 steady in this position for a few seconds, for example two or three seconds.

In this step the first electronic board detects said new position by means of the data read by the second electronic board 27, stores it, and emits an acoustic signal in order to warn the user that this new position has been registered and he can continue working.

From this moment, the new opening of the blades 13, 14 is the registered opening.

To return to the maximum opening of the blades 13, 14 the user keeps the trigger 20 fully pressed for four to five seconds, the first electronic board, by means of data received from the second electronic board 27, detects this command and emits an acoustic signal.

From that moment, upon release of the trigger 20, the blades 13, 14 open to their maximum opening.

In practice it has been found that the invention achieves the intended aim and objects, providing electric shears that allow at least two different opening widths of the blades.

The invention provides electric shears that allow the user to set up an intermediate opening width of the blades, according to the requirements.

Moreover, the invention provides electric shears that allow to save time and energy when cutting stems of small or medium size with respect to similar shears of the known type.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Patent Application No. 102022000006011 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Electric shears (10), comprising:
- a handle (11),
- an electrically actuated cutting portion (12), which extends from said handle (11) and comprises a first blade (13) and a second blade (14), at least said second blade (14) being operatable by a trigger (20) and being movable with respect to said handle (11) between:
- a position of maximum opening of the blades (13, 14), in which the tip (15) of said second blade (14) is at the maximum distance from the tip (16) of said first blade (13),
- a cutting position, in which the cutting edge (17) of said second blade (14) is in contact with said first blade (13),
said shears (10) being **characterized in that** they comprise means (18) for the setting and actuation of an intermediate opening of said blades (13, 14) which can be set at will by means of a movement of said trigger (20).

2. The shears (10) according to claim 1, **characterized in that** they comprise electric means for the movement of at least said second blade (14), which comprise:
- a gearmotor (19) which extends at least partially along said handle (11) and inside it and is powered by an electric battery,
- said trigger (20) for the operation of said gearmotor (19), said trigger (20) being provided with a first magnet (28),
- a pinion (21), which is keyed on the output shaft of said gearmotor (19) and interacts with at least said second blade (14).

3. The shears (10) according to claim 2, **characterized in that** said pinion (21) is engaged, with its teeth, with a first rack (25) of said second blade (14).

4. The shears (10) according to any one of the preceding claims, **characterized in that** said cutting portion (12) is associated with a support (22) at a distal end of said handle (11), which is at least partially tubular, said gearmotor (19) being extended at least partially within said support (22).

5. The shears (10) according to any one of the preceding claims, **characterized in that** said second blade (14) has a second magnet (31) which is arranged proximate to said first rack (25).

6. The shears (10) according to any one of the preceding claims, **characterized in that** they comprise:
- a first electronic board for the control and management of said shears (10),
- a second electronic board (27) for the detection of the position of said trigger (20) and of said second blade (14), said second electronic board (27) being connected to said first electronic board, said second electronic board (27) being associated with said support (22) and being arranged between it and said second blade (14), said second electronic board (27) having:
- a first sensor (29) adapted to interact with said first magnet (28) for the detection of the position of said trigger (20),
- a plurality of second sensors (30), which are arranged along a circular arc and are adapted to interact with said second magnet (31) for the detection of the position of said second blade (14).

7. The shears (10) according to any one of the preceding claims, **characterized in that** said means (18) for the setting and actuation of an intermediate opening comprise:
- said trigger (20) and its first magnet (28),
- said second blade (14) and its second magnet (31),
- said second electronic board (27) and its sensors (29, 30),
- said first electronic board.

8. The shears (10) according to any one of the preceding claims, **characterized in that** said first blade (13) also is movable with respect to said handle (11) and said pinion (21) interacts with said first blade (13).

9. The shears (10) according to one or more of the preceding claims, **characterized in that** said first blade (13) and said second blade (14) are pivoted on a same pivot (23) and said pinion (21) is engaged, with its teeth:
- on one side, with said first rack (25) of said second blade (14),
- on the other side, with a second rack (26) of said first blade (13).

10. A method of use of shears (10) according to one or more of the preceding claims, which comprises the steps of:
- starting from the maximum opening position of said blades (13, 14), pressing said trigger (20) until said second blade (14) is brought to a desired position in order to define a new intermediate opening,
- keeping said trigger (20) stationary in said desired position for a few seconds,
- detecting and storing, via said first electronic board, said desired position by means of the data read by said second electronic board (27),
- waiting for an acoustic signal to communicate that said desired position has been registered.
